# EUROPEAN PATENT SPECIFICATION

(11) **EP 2 850 024 B1**
(45) Date of publication and mention of the grant of the patent: **27.07.2016**
(21) Application number: 13734494.1
(22) Date of filing: 14.05.2013
(51) Int. Cl.: B65G 39/12, B65G 13/11

(54) **RAIL FOR CONVEYING GOODS**
SCHIENE ZUM TRANSPORT VON GÜTERN
RAIL PERMETTANT DE TRANSPORTER DES MARCHANDISES

(30) Priority: 15.05.2012 ES 201230524
(43) Date of publication of application: 25.03.2015
(73) Proprietor: Merino Casajuana, Carles, 08192 Sant Quirze Del Vallès (ES)
(72) Inventor: Merino Casajuana, Carles, 08192 Sant Quirze Del Vallès (ES)
(74) Representative: Oficina Ponti, SLP
(86) International application number: PCT/IB2013/053916
(87) International publication number: WO 2013/171669

(56) References cited:
- EP-A1- 1 652 794
- EP-A1- 2 143 668
- EP-A2- 1 477 437
- DE-U1- 8 408 175
- US-A- 2 964 155
- US-A- 4 054 195

## Description

The present invention relates to a rail for conveying goods, in particular, a roller rail for gravity displacement of parcels or light loads.

### Background of the invention

Roller rails are commonly used in industry for the gravity displacement of lightweight goods over shelves or work surfaces on which a number of sard rails have been previously mounted. This type of transport system is known in the industry under the name "flow track transport system".

There are rails on the market which comprise a substantially U-shaped profile in galvanised sheet metal or aluminium with side walls presenting a plurality of holes for receiving the spindles of the rollers. The aforesaid rollers turn on the spindle, and the spindle turns inside the hole in the profile. The spindle and roller assembly is secured inside the profile without being able to come out, by means of different entrapment techniques that seek to prevent the longitudinal displacement of the spindles inside the holes. One of such entrapment techniques consists of a rivet or portion of the upper edge of the side walls of the sheet metal or aluminium profile acting as a stopper for each end of the aforesaid spindles.

The roller rails made using profiles of galvanised sheet metal or aluminium present the drawback of eventually rusting and do not meet the aseptic conditions that are required for use in the production processes of the pharmaceutical or food industries, meaning that, in practice, these industries cannot use a type of lightweight goods transport based on roller rails of the type described.

Another drawback presented by roller rails made using sheet metal or galvanised steel profiles stems from the fact that, once the rollers have been assembled in the metal profile, the roller and spindle assembly is entrapped, which means that in the event of having to replace one of the aforesaid rollers, it is necessary to force the metal walls of the profile to deform in order to be able to remove the spindle and roller from the holes, given that the operation of removing the rivets that act as the stoppers of the ends of the spindle is too laborious and difficult.

EP 1 477 437 A2 describes a rail according to the preamble of claim 1.

### Description of the invention

The objective of the present invention is to resolve the aforesaid drawbacks by providing a rail for conveying goods according to claim 1.

In accordance with this objective, the present invention provides a rail for conveying goods which comprises a substantially U-shaped profile for supporting a plurality of rollers, each side wall of the aforesaid profile including a plurality of orifices for receiving the ends of the spindles of said rollers, said rollers being capable of rolling in respect of said profile in order to allow the conveying of said goods over the rail, and that is characterised in that said U-shaped profile is a profile made of extruded polymer material, preferably, of extruded plastic material, such as for example, extruded polypropylene.

The rail of the present invention presents the advantage over the metal profile rails comprised in the state of the art of including a profile that is integrally made of an extruded polymer material.

Thanks to this fact, a rail is obtained that can be used in food, horticultural and/or pharmaceutical industries, given that said polymer material is, preferably, an extruded material certified by the FDA (Food and Drug Administration) as a material that can be used with food, and/or as a material that can be sterilised and/or disinfected so that the rail meets the aseptic conditions required by the clean rooms of the aforesaid industries. Also, the polymer material of the profile is much more resistant than aluminium or sheet metal in the event of accidental spills or hygienic processes using corrosive liquids.

Another advantage of the rail of the present invention stems from the fact that it has been noted that it is not very noisy during use, given that the polymer material presents the advantage of muffling vibrations.

According to the invention, the profile of the aforesaid rail comprises means for preventing the longitudinal displacement of the spindles of the aforesaid rollers inside the aforesaid holes.

According to the invention, said means for preventing the longitudinal displacement of the spindles of said rollers comprise, for each end of said spindles, an upper portion of a side wall of said profile that is configured, in the form of a tab, so that it can be folded outwards over the ends of said spindles, with said portion of wall or tab acting as the stopper of said ends by remaining folded in a retracted position over said ends.

In the rail of the present invention, the longitudinal displacement of the ends of the spindles of the rollers is prevented by the aforesaid tabs of the side walls of the profile that are also made of plastic material or polypropylene. These tabs present the advantage of being much easier to handle than the rivets of the upper edges of the sheet metal or aluminium profiles in the state of the art.

Advantageously, each of the tabs is configured on the basis of an upper portion of a side wall of the profile that presents a reduced thickness in respect of the rest of the side wall so that it can fold over easily.

According to the invention, each of the tabs configured on the basis of an upper portion of the side wall of the profile comprises means for joining in a detachable manner to a lower portion of the same side walls, said joining means ensuring the retracted position of each one of the tabs when these act as the stoppers by folding over the ends of the aforesaid spindles.

Again advantageously, said detachable joining means comprise, for each tab, a snap-fit element arranged to engage with another interlocking element situated in the lower portion of the same side wall of the profile.

In this way, in the event of having to remove a spindle or a roller, it is only necessary to remove said interlocking element, to lift one tab and remove the spindle through a hole.

Optionally, the base of said profile comprises a plurality of through-holes. These holes are practical for the evacuation of substances in the event of accidental spills or for the evacuation of solid and/or liquid elements during cleaning and hygienic processes.

Preferably, the side walls of said profile each comprise an outer reinforcement rib that runs longitudinally in order to provide rigidity to the profile.

Again preferably, the rollers of the aforesaid rail are made of a polymer material, preferably of plastic or polypropylene material and, optionally, the spindle of said rollers is also made of polymer material. In this way, the rail is totally resistant to corrosive environments.

### Brief description of the drawings

For improved understanding of what has been set out above a set of drawings is attached which, schematically and by way of a non-limiting example, represent a practical embodiment.
Figure 1 is a cross section of the U-shaped profile of the rail of the present invention showing the tabs of the side walls of the profile in the extended position.
Figure 2 is a longitudinal section of the profile of figure 1.
Figure 3 is a cross section of the U-shaped profile of figure 1 showing the tabs of the side walls of the profile in the retracted position.

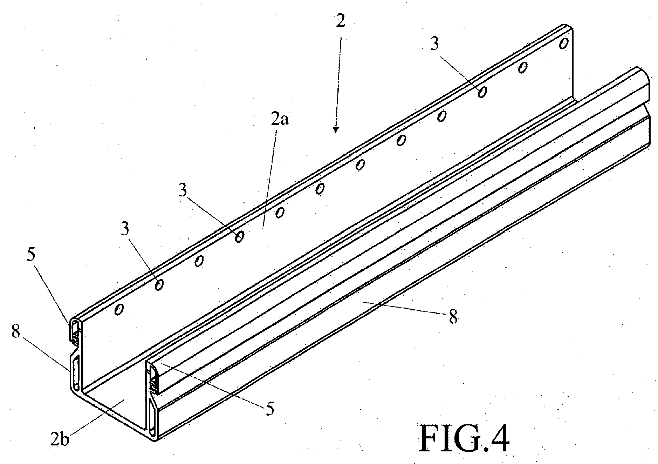

Figure 4 is a view in perspective of the profile of figure 3.
Figure 5 is a view in perspective of the profile of figure 4 with the rollers and spindles assembled.

### Description of a preferred embodiment

As may be seen from the drawings, the rail 1 of the present invention comprises a U-shaped profile 2 having side walls 2a provided with holes 3 in order to receive the ends of the spindles of rollers 4 that are assembled on the rail 1 for the conveying of goods.

The rail 1 of the present invention is characterised in that the profile 2 that supports the rollers 4 is made of extruded polymer material, preferably of plastic or polypropylene material. In the described embodiment, the rollers 4 of the rail 1 have also been contemplated in polymer, plastic or polypropylene material, whereas the spindle of said rollers 4 is made of stainless steel.

As mentioned in the description of the invention, the rail 1 of the present invention presents the advantage over the rails in the state of the art of being capable of meeting the aseptic conditions required by food, horticultural, chemical and/or pharmaceutical industries, given that the polymer material of the profile 2 and the rollers 4 can be sterilised and/or disinfected without any problem. Also, in the event of accidental spills of substances, the polymer material is totally resistant, as opposed to galvanised steel or sheet metal. At the same time, it has been observed that thanks to the polymer material, the rail 1 of the present invention is much less noisy than the rails of aluminium or galvanised sheet metal comprised in the state of the art.

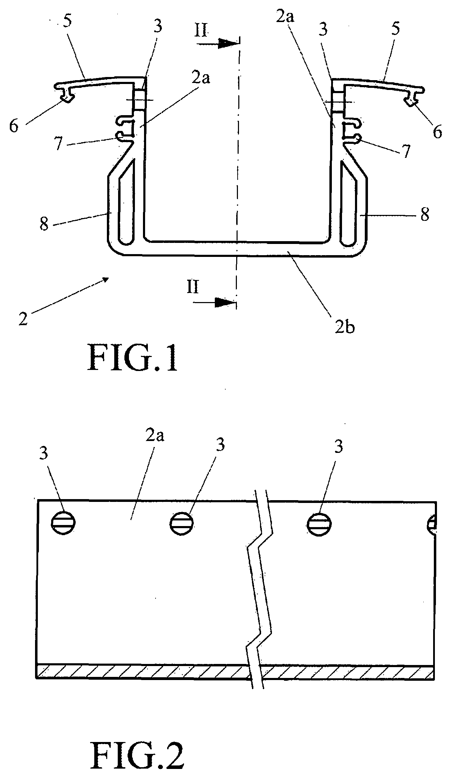

Figure 1 shows a cross section of the profile 2 of the rail 1 of the present invention where it is possible to appreciate tabs 5 configured on the basis of an upper portion of each side wall 2a of the profile 2. The thickness of said tabs 5 is less than that of the rest of the wall 2a of the profile 2 so that the tabs can fold over easily. In the same figure it is possible to appreciate the shape of the reinforcement rib 8 that extends longitudinally along the side walls 2a in order to provide rigidity to the profile 2 and to offset the force above created by the effect of the U closing, preventing the rollers from sinking inside the profile in the event of impacts or excessive loads.

As mentioned in the description of the invention, the tabs 5 have been contemplated in order to prevent the longitudinal displacement of the ends of the spindles of the rollers 4 inside the holes 3.

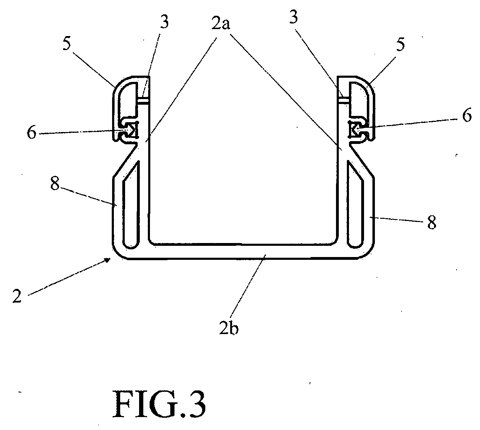

In figure 1 it is possible to see the tabs 5 in the extended position whereas in figure 3, the tabs 5 are in the retracted position, each secured by snap-fitting of a projection 6 inside a recess 7 provided in a lower portion of each one of the side walls 2a of the profile 2.

In their retracted position, the tabs 5 act as the stopper element of the ends of the spindles of the rollers 4 preventing said spindles from displacing towards the outside of the profile 2.

The projection 6 of the snap-fitting element and the recess 7 present the advantage of allowing a detachable joining of the tabs 5 to the side walls 2a of the profile 2. In this way, in the event of having to remove a spindle or a roller 4, it is only necessary to withdraw the projection 6 from the recess 7, to lift the tabs 5 and pass the spindle through the holes 3.

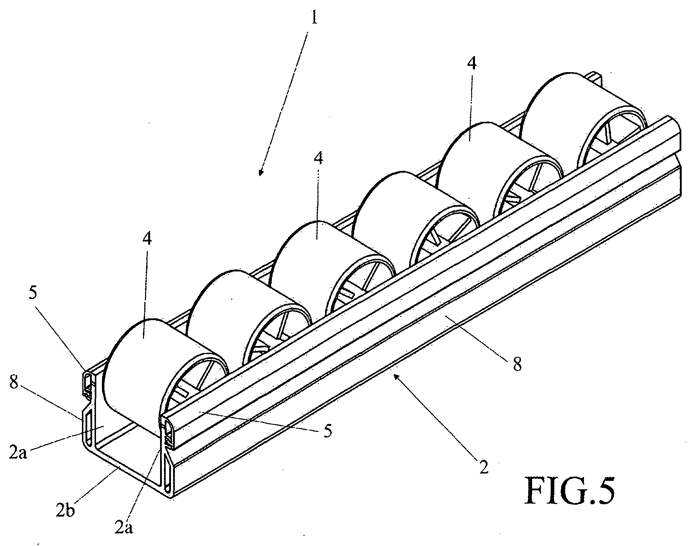

Figure 5 shows a view in perspective of the rail 1 with the rollers 4 and spindles assembled in the holes 3 of the profile 2.

In order to assemble the rollers 4 on the profile 2, the operative first places the spindles of the rollers 4 in the holes 3 of the profile 2 with the tabs 5 extended. Once all the rollers 4 have been put in place, the operative proceeds to secure the tabs 5 in the retracted position by snap-fitting the projections 6 into the recesses 7, thereby obtaining a roller rail 1 for the conveying of goods that is very compact and resistant to vibrations and that, moreover, is more hygienic, given that all the elements of the rail 1 can be sterilised and/or disinfected prior to use.

For example, in the described embodiment, the base 2b of the profile 2 does not have any opening. Nonetheless, the same base 2b could be provided with holes to allow the evacuation of substances in the event of accidental spills or cleaning processes using water and/or liquids. Similarly, although reference has been made in the description to a profile 2 made of a simple extruded polymer material, the same material could include in its composition some anti-bacterial product that would actively contribute towards guaranteeing that the rail 1 is aseptic.

## Claims

1. Rail (1) for conveying goods comprising a substantially U-shaped profile (2) to support a plurality of rollers (4), each of the side walls (2a) of the aforesaid profile (2) including a plurality of holes (3) to receive the ends of the spindles of said rollers (4), said rollers (4) being capable of rolling in respect of said profile (2) in order to allow the conveying of said goods over the rail (1) wherein said U-shaped profile (2) is a profile (2) made of an extruded polymer material **characterised in that** said rail 1 comprises means (5,6,7) for preventing the longitudinal displacement of the spindles of said rollers (4), inside said holes (3) said means (5,6,7) comprising, for each end of said spindles, an upper portion of a side wall (2a) of said profile (2) that is configured in the form of tab (5) so that it can fold outwards over the ends of said spindles, sind tab (5) being made of extruded polymer material, each of said tabs (5) comprising means (6,7) for detachable joining to a lower portion of the same side wall (2a), said detachable means (6,7) being able to secure the retracted position of each extruded tab (5) when these act a stopper element by remaining folded over the ends of said spindle.

2. Rail (1) according to claim 1, wherein said polymer material is plastic material, preferably, polypropylene.

3. Rail (1) according to claim 1, wherein each tab (5) is configured on the basis of an upper portion of a side wall (2a) of the profile (2) which presents a thickness that is less than that of the rest of the side wall (2a) of the profile so that it can fold easily.

4. Rail (1) according to claim 1, wherein said detachable joining means comprise a snap-fit element (6) disposed to engage with another complementary interlocking element (7) situated in the lower portion of the same side wall (2a) of the profile (2).

5. Rail (1) according to any of the preceding claims, wherein the base (2b) of said profile (2) comprises a plurality of through holes.

6. Rail (1) according to any of the preceding claims, wherein the side walls (2a) of said profile (2) each comprise an outer reinforcement rib (8) that runs longitudinally in order to provide rigidity to the profile (2).

7. Rail (1) according to any of the preceding claims, which comprises rollers (4) made of polymer material, preferably, plastic or polypropylene material, the spindle of said rollers (4) being made of stainless steel.

8. Rail (1) according to any of claims 1 to 6, wherein the spindle of said rollers (4) is also made of polymer material, preferably of plastic or polypropylene material.

## Patentansprüche

1. Schiene (1) zum Transport von Gütern, welche ein im Wesentlichen U-förmiges Profil (2) aufweist, um eine Vielzahl von Rollern (4) zu tragen, wobei jede der Seitenwände (2a) des vorher genannten Profils (2) eine Vielzahl von Löchern (3) aufweist, um die Enden der Spindeln der Roller (4) aufzunehmen, wobei die Roller (4) zum Rollen bezüglich des Profils (2) fähig sind, um den Transport der Güter über die Schiene (1) zu erlauben, wobei das U-förmige Profil (2) ein Profil (2) ist, welches aus einem extrudierten Polymermaterial hergestellt ist, **dadurch gekennzeichnet, dass** die Schiene (1) Mittel (5, 6, 7) zum Verhindern des Längsversatzes der Spindeln der Roller (4) in den Löchern (3) aufweist, wobei die Mittel (5, 6, 7) für jedes Ende der Spindeln einen oberen Abschnitt einer Seitenwand (2a) des Profils (2) aufweisen, welcher in der Form einer Lasche (5) ausgebildet ist, so dass er sich nach außen über die Enden der Spindeln falten kann, wobei die Lasche (5) aus extrudiertem Polymermaterial hergestellt ist, wobei jede der Laschen (5) Mittel (6, 7) zum lösbaren Verbinden zu einem unteren Abschnitt derselben Seitenwand (2a) aufweist, wobei die lösbaren Mittel (6, 7) fähig sind, die zurückgezogene Position jeder extrudierten Lasche (5) zu sichern, wenn diese als ein Stopperelement durch gefaltet bleiben über den Enden der Spindel wirken.

2. Schiene (1) nach Anspruch 1, wobei das Polymermaterial ein Plastikmaterial, vorzugsweise Polypropylen, ist.

3. Schiene nach Anspruch 1, wobei jede Lasche (5) auf der Basis eines oberen Abschnitts einer Seitenwand (2a) des Profils (2) ausgebildet ist, welcher eine Dicke aufweist, welche geringer ist als der Rest der Seitenwand (2a) des Profils, so dass sie leicht gefaltet werden kann.

4. Schiene (1) nach Anspruch 1, wobei die lösbaren Verbindungsmittel ein Rastelement (6) aufweisen, welches angeordnet ist, um in einem weiteren komplementären Schließelement (7) einzugreifen, welches an dem unteren Abschnitt derselben Seitenwand (2a) des Profils (2) angeordnet ist.

5. Schiene (1) nach einem der vorhergehenden Ansprüche, wobei die Basis (2b) des Profils (2) eine Vielzahl von Durchgangslöchern aufweist.

6. Schiene (1) nach einem der vorhergehenden Ansprüche, wobei die Seitenwände (2a) des Profils (2) jeweils eine äußere Versteifungsrippe (8) aufweisen, welche längs verläuft, um Festigkeit dem Profil (2) zur Verfügung zu stellen.

7. Schiene (1) nach einem der vorhergehenden Ansprüche, welche Roller (4) aufweist, welche aus Polymermaterial, vorzugsweise aus Plastik oder aus Polypropylenmaterial, hergestellt sind, wobei die Spindel der Roller (4) aus rostfreiem Stahl hergestellt ist.

8. Schiene (1) nach irgendeinem der Ansprüche 1 bis 6, wobei die Spindel der Roller (4) auch aus einem Polymermaterial, vorzugsweise aus Plastik oder aus Polypropylenmaterial, hergestellt ist,

## Revendications

1. Rail (1) pour le convoyage de marchandises comprenant un profilé substantiellement en U (2) pour supporter plusieurs roulettes (4), chacune des parois latérales (2a) dudit profilé (2) comprenant plusieurs trous (3) pour recevoir les extrémités des axes desdites roulettes (4), lesdites roulettes (4) étant capables de rouler par rapport audit profilé (2) afin de permettre le convoyage desdites marchandises sur le rail (1), **caractérisé en ce que** ledit profilé en U (2) est un profilé (2) fabriqué dans un polymère extrudé, dans lequel ledit rail (1) comprend des moyens (5, 6, 7) pour empêcher le déplacement longitudinal des axes desdites roulettes (4) dans lesdits trous (3), lesdits moyens (5, 6, 7) comprenant, pour chaque extrémité desdits axes, une partie supérieure de paroi latérale (2a) dudit profilé (2) qui est configuré sous la forme d'une languette (5) qu'il est possible de plier vers l'extérieur sur les extrémités desdits axes, ladite languette (5) étant fabriquée dans un polymère extrudé, chacune desdites languettes (5) comprenant des moyens (6, 7) de jointure détachable à une partie inférieure de la même paroi latérale (2a), lesdits moyens détachables (6, 7) étant capables de sécuriser la position rétractée de chaque languette extrudée (5) lorsque ceux-ci agissent comme un élément butoir en restant plié sur les extrémités dudit axe.

2. Rail (1) selon la revendication 1, dans lequel ledit matériau polymère est un matériau plastique, de préférence du polypropylène.

3. Rail (1) selon la revendication 1, dans lequel chaque languette (5) est configurée sur la base d'une partie supérieure d'une paroi latérale (2a) du profilé (2) présentant une épaisseur inférieure au reste de la paroi latérale (2a) du profilé afin qu'elle puisse se plier facilement.

4. Rail (1) selon la revendication 1, dans lequel lesdits moyens de jointure détachable comprennent un élément d'emboîtement (6) prévu pour s'adapter à un autre élément d'interverrouillage complémentaire (7) situé sur la partie inférieure de la même paroi verticale (2a) du profilé (2).

5. Rail (1) selon une quelconque des revendications précédentes, dans lequel la base (2b) dudit profilé (2) comprend plusieurs trous traversants.

6. Rail (1) selon une quelconque des revendications précédentes, dans lequel les parois latérales (2a) dudit profilé (2) comprennent chacune un renfort (8) longitudinal visant à apporter de la rigidité au profilé (2).

7. Rail (1) selon une quelconque des revendications précédentes, comprenant des roulettes (4) fabriquées dans un matériau polymère, de préférence un matériau plastique ou polypropylène, l'axe desdites roulettes (4) étant fabriqué en acier inoxydable.

8. Rail (1) selon une quelconque des revendications 1 à 6, dans lequel l'axe desdites roulettes (4) est également fabriqué en matériau polymère, de préférence un matériau plastique ou polypropylène.
